# EUROPEAN PATENT SPECIFICATION

(11) **EP 0 800 088 B1**
(45) Date of publication and mention of the grant of the patent: **02.10.2002**
(21) Application number: 97200905.4
(22) Date of filing: 25.03.1997
(51) Int. Cl.: G01P 3/66

(54) **Method and apparatus for measuring the speed of a vehicle**
Verfahren und Vorrichtung zur Messung der Geschwindigkeit eines Fahrzeuges
Procédé et dispositif de mesure de la vitesse d'un véhicule

(30) Priority: 01.04.1996 NL 1002749; 26.09.1996 NL 1004122
(43) Date of publication of application: 08.10.1997
(73) Proprietor: Gatsometer B.V., 2031 CW Haarlem (NL)
(72) Inventor: Gatsonides, Tom, 2116 EH Bentveld (NL)
(74) Representative: Bartelds, Erik

(56) References cited:
- EP-A- 0 042 546
- EP-A- 0 629 861
- DE-A- 4 410 127
- JOURNAL A, vol. 21, no. 3, 1 July 1980, ANTWERPEN, pages 104-111, XP002023265 DE KROES ET AL: "PRECISE MEASUREMENTS OF SPEED AND LENGTH OF VEHICLES USING INDUCTION LOOPS: THE TRAPEZIUM METHOD"

## Description

The invention relates to a method for measuring the speed of a vehicle by successively detecting the passage of the vehicle in at least two locations lying at a predetermined mutual distance establishing a number of measuring points during each detection, determining the time lag between corresponding measuring points of the detections at the successive locations and deriving the speed therefrom. Such a method is known, e.g. from EP-A-0 629 861, and is used to perform speed measurements at fixed points. Such measurements are particularly important at places where too high a speed can cause a dangerous traffic situation such as for instance at intersections.

In the known method to three dimensional magnetic field detectors are used, which are arranged near a road at a certain fixed mutual distance. Each of these magnetic field detectors generates a wave form signal when a vehicle passes. This signal is compared to a threshold value, and both the moment when the signal strength exceeds the threshold and the moment that the signal strength again falls below the treshold are established as measuring points. The time elapsed between corresponding measuring points in the signals of the two detectors is measured. As there are always two measuring points, there are two values for the time lags, from which a single mean value is determined. The speed of the vehicle is eventually determined simply by deviding the known distance between the detectors by the mean time measured. When this speed is higher than the maximum speed a camera may for instance be activated. In order to enhance the accuracy this document also proposes to compare each signal with a plurality of treshold values, in order to obtain more measuring points per signal. The document further proposes to determine the median of the measured times, which could then again be averaged.

For this known measurement, like in other known methods wherein use is generally made of detection loops arranged in the road surface, only two detection loops are used. However, there is increasing objection to this. It has been found that such a measurement is not always completely reliable, whereby there is a danger that road-users are being penalized for offences which they have not actually committed, or conversely that traffic offences go unpunished. It is therefore already required in some countries that at least three independent measurements be performed when speed measurements are carried out in this way, wherein there is only a question of an offence when this is clearly indicated by all three measurements. It has already been proposed for this purpose to simply increase the number of detection loops, whereby a plurality of successive speed measurements could be performed. Arranging detection loops in the road surface is however relatively expensive, while it moreover results in traffic disruption. In addition, as stated above, such speed measurements are often performed in the vicinity of intersections, wherein the detection loops also serve to detect offences relating to traffic lights placed at that junction. Now, if more than two detection loops have to be arranged, each of which must have a sufficiently large interspacing to enable an accurate measurement, the final loops will be situated in the middle of the intersection area. This will entail the danger of interference occurring as a result of the crossing traffic, while interference problems will moreover occur when speed measurements have to be performed on both intersecting roads.

The invention now has for its object to provide a method of the above described type with which a number of independent speed measurements can be performed without additional detection loops having to be arranged for this purpose. According to the invention this is achieved in that per detection at least three measuring points are determined and the speed derived therefrom is only accepted as valid measurement value if the time lag determined for each of these measuring points corresponds with the time lag determined for the other measuring points. By establishing a number of measuring points during each detection and by using these points as independent measuring points, a plurality of independent speed measurements can be performed with two detections which are for instance carried out with two detection loops.

Preferably applied variants of the method according to the invention are described in the dependent claims 2-4.

The invention also relates to an apparatus for performing the above described method. Such an apparatus, which is an apparatus for measuring the speed of a vehicle provided with means arranged at at least two locations lying at a predetermined mutual distance for detecting a passage of the vehicle, said detection means being adapted for establishing a number of measuring points during each passage, means connected to the detection means for measuring the time lag between corresponding measuring points established by the detection means, and processing and control means connected to the time measuring means for deriving the speed therefrom, is characterized according to the invention by means connected to the processing and control means for recording an image of the vehicle, wherein the processing and control means are adapted for transmitting a control signal to the recording means if a corresponding time lag is determined for at least three measuring points and the speed derived therefrom is greater than the maximum allowed speed at that location.

Preferred embodiments of the measuring apparatus according to the invention form the subject-matter of the dependent claims 6-8.

The invention is now elucidated on the basis of an embodiment, wherein reference is made to the annexed drawing, in which:
fig. 1 shows a schematic perspective view of an intersection of two roads where a speed measuring apparatus according to the present invention is present,
fig. 2 is a graphic representation of the detection signals generated at two successive locations when a passenger vehicle passes there,
fig. 3 is a representation corresponding with fig. 2 of the passage of a truck, and
fig. 4 is a schematic flow diagram in which the different steps of the method according to the invention are shown.

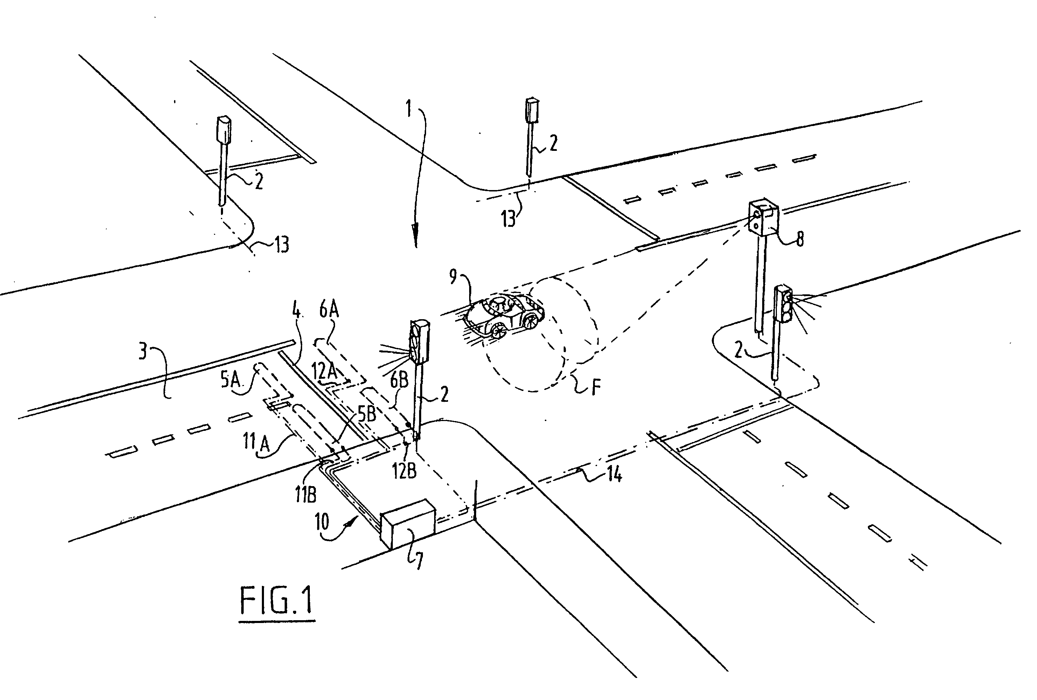

At a crossroads 1 (fig. 1) which is provided with a number of traffic lights 2, an apparatus 10 is arranged for measuring the speed of passing vehicles 9. This speed measuring apparatus 10 comprises detection means in the form of a plurality of detection loops 5A, 6A and 5B, 6B arranged in the road surface 3. Detection loops 5A, 6A, 5B, 6B are arranged on either side of a halt line 4 painted on the road surface, whereby they can also serve to detect offences relating to traffic lights 2, such as driving through a red light. Detection loops 5A and 6A serve to measure the speed in the left-hand lane, while detection loops 5B and 6B measure the speed of vehicles in the right-hand lane. Detection loops 5A, 5B, 6A, 6B are connected via lines 11A, 11B, 12A, 12B to a system unit 7 in which time measuring means and processing and control means are accommodated. In contrast to known measuring systems based on detection loops, which perform a scanning measurement, the detection means, time measuring means and processing and control means 7 in the measuring apparatus according to the invention are adapted to perform measurements continuously. The system unit 7 is further connected via lines 13 to traffic lights 2, whereby the system unit can also be used to control the traffic lights and optionally to register offences relating to these traffic lights. System unit 7 is further connected via a line 14 to means 8 for recording one or more images of an offending vehicle 9. These recording means 8 can take the form of a photo or video camera.

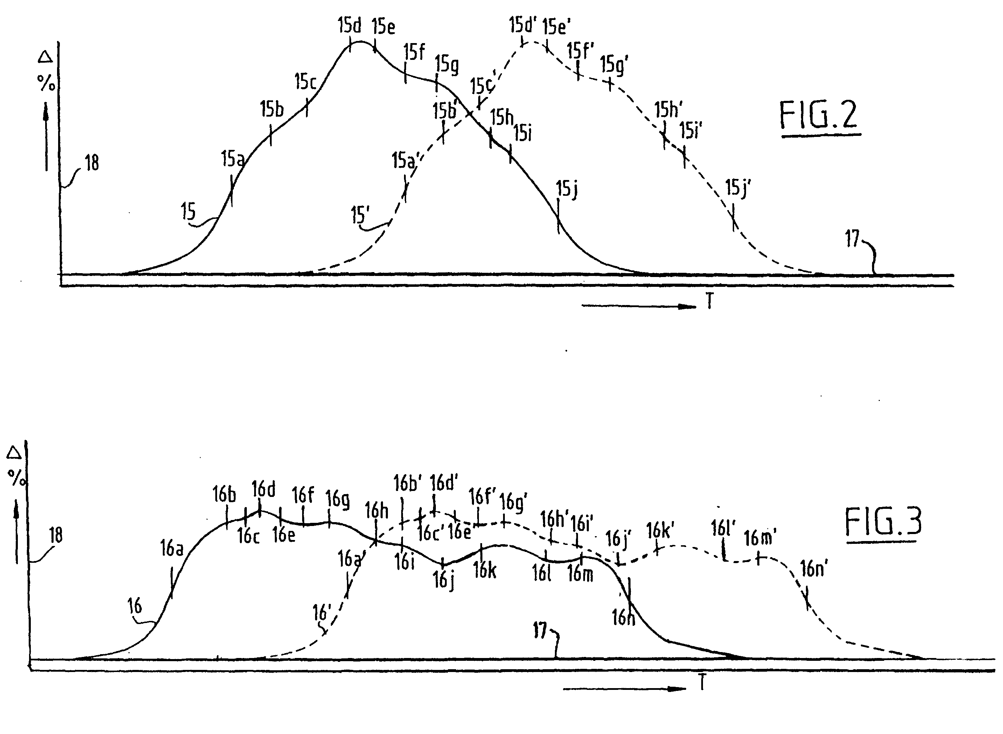

The system unit 7, which can take the form of a programmable logic circuit (PLC) or a small PC, has means for measuring the time lag between detections by successive detection loop 5A and 6A or 5B and 6B. These detections herein take the form of a wave-form signal, the progression of which in time (plotted along the horizontal axis 17) is shown schematically in fig. 2 and 3. The wave-form detection signal 15, 16 represents the percentual change of the inductance in the loops 5A, 5B, 6A, 6B (plotted along the vertical axis 18) which, in accordance with Maxwell's law, is the result of the displacement of a conductor, i.e. the strongly metallic vehicle 9, relative to the geomagnetic field. The wave form of the detection signal is therein characteristic of a determined vehicle, while the magnitude of the inductance change is related to the speed of the vehicle. When fig. 2 and 3 are compared, it is noticeable that the signal of a passenger car is generally stronger than that of a truck, because the metal parts of a car move closer to the road surface than those of a truck. In addition, the length of the signal is shorter as a result of the normally shorter length of a passenger car.

The detection signal 15 respectively 16 has a number of characteristic points 15a-15j respectively 16a-16n. The point 15a respectively 16a can herein for instance represent driving onto the detection loop, while the point 15j respectively 16n indicates departure from the loop. Therebetween can be designated a number of characteristic points of inflection or extremes 15b-15i respectively 16b-16m which are related to the form and the speed of the vehicle. By now comparing the detection signal 15 respectively 16 of the first loop 5A or 5B to the detection signal 15' respectively 16' of the second loop 6A or 6B, corresponding characteristic points in both signals can be identified. The time which has elapsed between each set of corresponding characteristic points can be measured and a speed can be determined therefrom. In this manner ten measurements can for instance be performed for the passenger vehicle in the example shown, while in the example shown for the truck as many as fourteen measurements could be performed. It is thus possible to comply in relatively simple manner with the more and more frequently imposed requirement that at least three measurements must be performed.

Since as stated the wave-form of the signal 15 or 16 is related to the shape, dimensions and speed of the vehicle, it is always possible to determine in simple manner that the signals which are compared to each other come from one and the same vehicle. Incorrect measurements are therefore practically impossible. When however the speed of the vehicle changes greatly between the two detection locations, for instance because the driver of the vehicle suddenly brakes or accelerates, the wave-form of the signal will also change, whereby no or not enough corresponding points are found. Insufficient measuring points will then be available to perform a valid measurement.

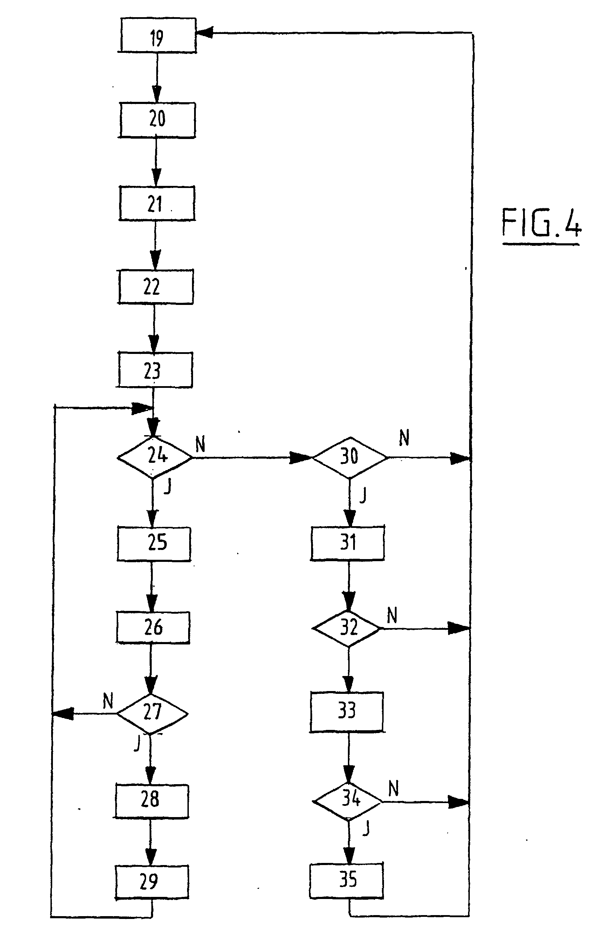

Performing of a speed measurement in the manner according to the invention therefore proceeds as follows (fig. 4). Starting from a ready for operation or standby mode (block 19), the detection means determine that a vehicle 9 is passing the first location 5A or 5B (block 20). The passage of the vehicle over the second location 6A or 6B is subsequently also detected (block 21). The signals obtained from these two detections are each then first sampled (blocks 22 and 23), whereby the analog signal 15 respectively 16 shown in fig. 2 and 3 is converted into a histogram.

The histogram bars are then successively compared to each other. A search is made for this purpose in block 24 as to whether any histogram bars remain which have not yet been subjected to a comparison. Should this be the case, the first subsequent, as yet unexamined part of the histogram of the first signal is then taken (block 25) and the corresponding part of the second signal is matched therewith (block 26). The height of these histogram bars, which represents the inductance change of the original signal, is compared (block 27). If the heights do not correspond, block 24 is re-entered. If the heights do correspond, such a bar is accepted as valid measuring point. The time lag between the compared histogram parts is then determined (block 28) and stored as measuring point (block 29), whereafter block 24 is re-entered. In this manner a number of measuring points in the signal are determined.

When no further unexamined parts of the sampled signal remain, a check is made in block 30 as to whether enough measuring points have been found, therefore at least three according to the new criteria. If this is not the case, the starting situation is restored (block 19). If however sufficient measuring points have been found, the measured values for the time lag between each set of corresponding measuring points are compared to each other (block 31). A check is subsequently made in block 32 as to whether these values correspond sufficiently with each other. Should this not be the case, for instance because the speed of the vehicle has changed greatly during the measurement, this constitutes an invalid measurement and the starting situation is restored. If the values do correspond sufficiently, the speed is then determined therefrom by dividing the distance between the detection loops by the measured time lag (block 33) and compared with the speed limit in force at that location (block 34). When the measured speed is greater than the maximum allowed speed a warning signal is generated (block 35). In the embodiment shown this warning signal can be transmitted directly to the recording device 8, whereby a photo or video recording of vehicle 9 is made. The warning signal can also be used to bring the offender to the attention of a supervising police officer.

The method and apparatus according to the invention thus nevertheless enable a very accurate and reliable speed measurement with a minimum number of detection loops, whereby the danger of unjustified penalties or unpunished offences is minimized without large investments being required for this purpose. Although the invention is described above with reference to a speed measurement with two detection loops at an intersection, it will be apparent to the skilled person that it is not limited thereto. The speed measurement can after all take place at any location where at least two such loops can be arranged, while it is also possible to apply more than two loops, for instance as extra safeguard against errors.

## Claims

1. Method for measuring the speed of a vehicle (9) by successively detecting the passage of the vehicle (9) in at least two locations (5A, 6A; 5B, 6B) lying at a predetermined mutual distance establishing a number of measuring points (15a-15j, 16a-16n; 15a'-15j', 16a'-16n') during each detection, determining the time lag between corresponding measuring points (15a-15j, 16a-16n; 15a'-15j', 16a'-16n') of the detections at the successive locations (5A,6A; 5B, 6B) and deriving the speed therefrom, **characterized in that** per detection at least three measuring points are determined and the speed derived therefrom is only accepted as valid measurement value if the time lag determined for each of these measuring points corresponds with the time lag determined for the other measuring points.

2. Method as claimed in claim 1, **characterized in that** each time the vehicle (9) passes a wave-form detection signal (15, 15'; 16, 16') is generated and the measuring points (15a-15j, 16a-16n; 15a'-15j', 16a'-16n') are formed by corresponding characteristic points of the wave-form signal (15, 15'; 16, 16').

3. Method as claimed in claim 1 or 2, **characterized in that** the wave-form detection signal (15, 16) is sampled, the strength of each thus sampled part of the signal (15, 16) is compared with that of a corresponding part of the following (15', 16') or foregoing signal and a sampled signal part is only accepted as measuring point if the compared signal strengths mutually correspond.

4. Method as claimed in any of the foregoing claims, **characterized in that** the speed measurements are performed continuously.

5. Apparatus (10) for measuring the speed of a vehicle (9) provided with means (5A, 6A; 5B, 6B) arranged at at least two locations lying at a predetermined mutual distance for detecting a passage of the vehicle (9), said detection means (5A, 6A; 5B, 6B) being adapted for establishing a number of measuring points during each passage, means (7) connected to the detection means (5A, 6A; 5B, 6B) for measuring the time lag between corresponding measuring points established by the detection means (5A, 6A; 5B, 6B), and processing and control means (7) connected to the time measuring means (7) for deriving the speed therefrom, **characterized by** means (8) connected to the processing and control means (7) for recording an image of the vehicle (9), wherein the processing and control means (7) are adapted for transmitting a control signal to the recording means (8) if a corresponding time lag is determined for at least three measuring points and the speed derived therefrom is greater than the maximum allowed speed at that location.

6. Measuring apparatus (10) as claimed in claim 5, **characterized in that** the detection means (5A, 6A; 5B, 6B) are adapted for generating a wave-form detection signal (15, 16) during passage of the vehicle (9), wherein characteristic points (15a-15j, 16a-16n) of this wave-form signal (15, 16) function as measuring points.

7. Measuring apparatus (10) as claimed in claim 5 or 6, **characterized in that** the processing and control means (7) are adapted for sampling each wave-form detection signal (15, 16) and for comparing the strength of each thus sampled part of a signal (15, 16) with that of a corresponding part of the following (15', 16') or foregoing signal.

8. Measuring apparatus (10) as claimed in claim 7, **characterized in that** the processing and control means are adapted for establishing a sampled signal part as measuring point if the strength thereof corresponds with that of a corresponding signal part of a following or foregoing detection signal (15, 15'; 16, 16').

9. Measuring apparatus (10) as claimed in any of the claims 5-8, **characterized in that** the detection means (5A, 6A; 5B, 6B), the time measuring means (7) and the processing and control means (7) are adapted for continuous operation.

## Patentansprüche

1. Verfahren zur Messung der Geschwindigkeit eines Fahrzeugs (9) durch aufeinanderfolgendes Detektieren der Durchfahrt des Fahrzeugs (9) an mindestens zwei Stellen (5A, 6A; 5B, 6B), die bei einem vorbestimmten Abstand zueinander liegen, wodurch eine Anzahl von Messpunkten (15a-15j, 16a-16n; 15a'-15j, 16a-16n; 15a'-15j', 16a'-16n') während jeder Detektion festgelegt werden, Bestimmen der Verzögerung zwischen entsprechenden Meßpunkten (15a-15j, 16a-16n; 15a'-15j', 16a'-16n') der Detektionen an den aufeinanderfolgenden Stellen (5A, 6A; 5B, 6B) und Ermitteln der Geschwindigkeit daraus, **dadurch gekennzeichnet, dass** pro Detektion mindestens drei Messpunkte bestimmt werden und die daraus ermittelte Geschwindigkeit nur als gültiger Messwert akzeptiert wird, wenn die Verzögerung, die für jeden dieser Messpunkte bestimmt wird, mit der Verzögerung übereinstimmt, die für die anderen Messpunkte bestimmt wurden.

2. Verfahren wie in Anspruch 1 beansprucht, **dadurch gekennzeichnet, dass** jedes Mal, wenn das Fahrzeug (9) durchfährt, ein Wellenform-Detektionssignal (15, 15'; 16, 16') erzeugt wird und die Messpunkte (15a-15j, 16a-16n; 15a'-15j', 16a'-16n') durch entsprechende charakteristische Punkte des Wellenformsignals (15, 15'; 16, 16') gebildet werden.

3. Verfahren wie in Anspruch 1 oder 2 beansprucht, **dadurch gekennzeichnet, dass** das Wellenform-Detektionssignal (15, 16) gesammelt wird, die Stärke von jedem so gesammelten Teil des Signals (15, 16) mit dem eines entsprechenden Teiles des darauf folgenden (15', 16') oder des vorangehenden Signals verglichen wird und ein gesammelter Signalteil als Messpunkt nur akzeptiert wird, wenn die verglichenen Signalstärken sich einander entsprechen.

4. Verfahren wie in irgendeinem der vorangehenden Ansprüche beansprucht, **dadurch gekennzeichnet, dass** die Geschwindigkeitsmessung kontinuierlich ausgeführt wird.

5. Vorrichtung (10) zum Messen der Geschwindigkeit eines Fahrzeugs (9), die mit Einrichtungen (5A, 6A; 5B, 6B), die an mindestens zwei Stellen, die bei einem vorbestimmten Abstand zueinander liegen, angeordnet sind, zum Detektieren einer Durchfahrt des Fahrzeugs (9), wobei die Detektionseinrichtungen (5A, 6A; 5B, 6B) so angepasst sind, dass eine Anzahl von Messpunkten während jeder Durchfahrt festgelegt sind, mit einer Einrichtung (7), die mit den Detektionseinrichtungen (5A, 66A; 5B, 6B) verbunden ist, zum Messen der Verzögerung zwischen entsprechenden Messpunkten, die durch die Detektionseinrichtungen (5A, 6A; 5A, 6B) festgelegt wurden, sowie mit einer Prozessierund Steuereinrichtung (7), die mit der Zeitmesseinrichtung (7) verbunden ist, zum Ermitteln der Geschwindigkeit daraus ausgestattet ist, **gekennzeichnet durch** eine Einrichtung (8), die mit der Prozessier- und Steuereinrichtung (7) verbunden ist, zum Aufzeichnen eines Bildes des Fahrzeuges (9), wobei die Prozessier- und Steuereinrichtung (7) darauf angepasst ist, dass ein Steuersignal an die Aufzeichnungseinrichtung (8) übertragen wird, wenn eine entsprechende Zeitverzögerung für mindestens drei Messpunkte bestimmt ist und die daraus ermittelte Geschwindigkeit größer ist als die an dieser Stelle erlaubte Maximalgeschwindigkeit.

6. Messvorrichtung (10) wie im Anspruch 5 beansprucht, **dadurch gekennzeichnet, dass** die Detektionseinrichtungen (5A, 6A; 5B, 6B) angepasst sind auf das Erzeugen eines Wellenform-Detektionssignals (15, 16) während der Durchfahrt des Fahrzeugs (9), wobei die charakteristischen Punkte (15a-15j, 16a-16n) dieses Wellenformsignals (15, 16) als Messpunkte fungieren.

7. Messvorrichtung (10) wie im Anspruch 5 oder 6 beansprucht, **dadurch gekennzeichnet, dass** die Prozessier- und Steuereinrichtung (7) angepasst ist auf das Auffangen jedes Wellenformdetektionssignals (15, 16) und auf einen Vergleich der Stärken von jedem so gesammelten Teil eines Signals (15, 16) mit dem eines entsprechenden Teils des nachfolgenden (15', 16') oder vorangehenden Signals.

8. Messvorrichtung (10) wie im Anspruch 7 beansprucht, **dadurch gekennzeichnet, dass** die Prozessier- und Steuereinrichtung angepasst auf das Festlegen eines gesammelten Signalteils als Messpunkt, wenn dessen Stärke mit einem entsprechenden Signalteil eines nachfolgenden oder vorangehenden Detektionssignals (15, 15'; 16, 16') übereinstimmt.

9. Messvorrichtung (10) wie in irgendeinem der Ansprüche 5-8 beansprucht, **dadurch gekennzeichnet, dass** die Detektionseinrichtungen (5A, 6A; 5B, 6B), die Zeitmesseinrichtung (7) und die Prozessier- und Steuereinrichtung (7) auf einen kontinuierlichen Betrieb angepasst sind.

## Revendications

1. Procédé pour mesurer la vitesse d'un véhicule (9) en détectant, successivement, le passage du véhicule (9) dans au moins deux emplacements (5A, 6A; 5B, 6B) se situant à une distance mutuelle prédéterminée, en établissant un certain nombre de points de mesure (15a-15j, 16a-16n ; 15a'-15j', 16a'-16n') entre chaque détection, en déterminant le décalage entre les points de mesure correspondants (15a-15j, 16a-16n ; 15a'-15j', 16a'-16n') des détections au niveau des emplacements successifs (5A, 6A ; 5B, 6B) et en dérivant la vitesse à partir de ces valeurs, **caractérisé en ce que** trois points de mesure au moins sont déterminés par détection, et la vitesse dérivée de ces derniers est n'acceptée comme valeur de mesure valide que lorsque le décalage déterminé pour chacun de ces points de mesure correspond au décalage déterminé pour les autres points de mesure.

2. Procédé selon la revendication 1, **caractérisé en ce que** à chaque passage de véhicule (9) un signal de détection en forme d'onde (15, 15' ; 16, 16') est généré, et les points de mesure (15a-15j, 16a-16n ; 15a'-15j', 16a'-16n') sont formés par des points caractéristiques correspondants du signal en forme d'onde (15, 15'; 16, 16').

3. Procédé selon la revendication 1 ou la revendication 2, **caractérisé en ce que** le signal de détection en forme d'onde (15, 16) est échantillonné, la puissance de chaque partie ainsi échantillonnée du signal (15, 16) est comparée à celle d'une partie correspondante du signal suivant (15', 16') ou précédent et une partie de signal échantillonnée n'est acceptée comme point de mesure que lorsque les puissances de signaux comparées se correspondent.

4. Procédé selon l'une quelconque des revendications précédentes, **caractérisé en ce que** les mesures de vitesse sont effectuées de manière continue.

5. Appareil (10) pour mesurer pour mesurer la vitesse d'un véhicule (9) pourvu de moyens (5A, 6A; 5B, 6B) disposés en au moins deux emplacements situées à une distance mutuelle prédéterminée pour détecter un passage de véhicule (9), ledit moyen de détection (5A, 6A ; 5B, 6B) étant adapté pour définir un certain nombre de points de mesure pendant chaque passage, des moyens (7) connectés au moyen de détection (5A, 6A ; 5B, 6B) pour mesurer le décalage entre les points de mesure correspondants établis par le moyen de détection (5A, 6A ; 5B, 6B), et des moyens de commande et de traitement (7) connectés au moyen de mesure du temps (7) pour dériver la vitesse de ces derniers, **caractérisé par** des moyens (8) connectés aux moyens de commande et de traitement (7) pour enregistrer une image du véhicule(9), selon lequel les moyens de traitement et de commande (7) sont adaptés pour transmettre un signal de commande au moyen d'enregistrement (8) si un décalage correspondant est déterminé pour au moins trois points de mesure et la vitesse dérivée à partir de ces derniers est supérieure à la vitesse maximale autorisée en cet emplacement.

6. Appareil de mesure (10) selon la revendication 5, **caractérisé en ce que** les moyens de détection (5A, 6A ; 5B, 6B) sont adaptés pour générer un signal de détection en forme d'onde (15, 16) lors du passage du véhicule (9), selon lequel les points caractéristiques (15a-15j, 16a-16n) de ce signal en forme d'onde (15, 16) servent de points de mesure.

7. Appareil de mesure (10) selon la revendication 5 ou la revendication 6, **caractérisé en ce que** les moyens de traitement et de commande (7) sont adaptés pour échantillonner chaque signal de détection en forme d'onde (15, 16) et pour comparer la puissance de chaque partie ainsi échantillonnée d'un signal (15, 16) à une partie correspondante du signal suivant (15', 16') ou précédent.

8. Appareil de mesure (10) selon la revendication 7, **caractérisé en ce que** les moyens de traitement et de commande sont adaptés pour établir une partie de signal échantillonnée comme point de mesure si la puissance de ce dernier correspond à celle d'une partie de signal correspondante d'un signal de détection suivant ou précédent (15, 15" ; 16, 16').

9. Appareil de mesure (10) selon l'une quelconque des revendications 5 - 8, **caractérisé en ce que** les moyens de détection (5A, 6A ; 5B, 6B), les moyens de mesure du temps (7) et les moyens de commande et de traitement (7) sont adaptés pour fonctionner en continu.
